# EUROPEAN PATENT SPECIFICATION

(11) **EP 3 678 942 B1**
(45) Date of publication and mention of the grant of the patent: **14.07.2021**
(21) Application number: 18782511.2
(22) Date of filing: 06.09.2018
(51) Int. Cl.: B65B 19/04, A24C 5/32, A24C 5/35, B65B 35/34, B65B 35/44, B65G 15/14

(54) **HOPPER FOR SMOKING ARTICLES**
TRICHTER FÜR RAUCHARTIKEL
TRÉMIE POUR ARTICLES À FUMER

(30) Priority: 06.09.2017 IT 201700099670
(43) Date of publication of application: 15.07.2020
(73) Proprietor: G.D Società per Azioni, 40133 Bologna (IT)
(72) Inventor: FORTINI, Massimo, 40057 Granarolo Emilia (BO) (IT); VILLA, Stefano, 40064 Ozzano Emilia (BO) (IT); FEDERICI, Luca, deceased (IT)
(74) Representative: Maccagnan, Matteo
(86) International application number: PCT/IB2018/056801
(87) International publication number: WO 2019/049059

(56) References cited:
- US-A- 3 127 971
- US-A- 4 555 011
- US-A1- 2006 237 336

## Description

### TECHNICAL FIELD

The invention belongs to the technical field of the production of packs for smoking articles. In detail, the invention relates to a hopper for smoking articles.

### PRIOR ART

As it is known, in the production of packs for smoking articles, for example cigarettes, hoppers are used to arrange masses of smoking articles so that they can be inserted, in groups or rows, into packaging material used to manufacture a pack. A known hopper has a mainly vertical extension and comprises: an inlet portion, which receives the smoking articles arranged in disorderly masses; a plurality of output mouths, each comprising, in turn, a plurality of ducts (or small channels) for letting the smoking articles out of the hopper (with the aid of suitable extracting means), and a connection area, which connects the inlet portion to the output mouths and is delimited by lateral walls coming into contact with the smoking articles during their output path.

A known hopper further comprises a plurality of agitating elements, arranged at the inlet of the ducts of the output mouths, which receive on them, by gravity, the flow of smoking articles. The agitating elements generally have a cylindrical shape and are movable (thanks to a dedicated motor) so as to rotate and/or oscillate around an axis of theirs so as to help the smoking articles move downward from the connection portion towards the outlet of the ducts.

A currently more and more pressing issue for manufacturers is that of increasing the productivity of machines for producing packs for smoking articles. Therefore, in hoppers, both the number of output mouths and the speed at which the smoking articles are fed to the output mouths have been increased.

However, the aforesaid measures often cause, in known hoppers of the type described above, blockages, namely undesired obstructions of one or more ducts of the output mouths. These obstructions are caused by the weight of the smoking articles which, by moving downward towards the output mouths in large quantities and at high speeds, settle in mass on the agitating elements, thus causing the blockage thereof and, hence, the relative malfunctioning. As a consequence, at least an output mouths experiences a blockage or a slowing down and this leads, in a chain reaction, to the blockage of all the other output mouths. This causes standstill times of the machine, which are clearly associated with high costs. Patent US4555011A1 and patent US3127971A represent the closest prior art and describe a hopper for cigarettes provided with a plurality of agitating elements, which are arranged at the inlet of the ducts of the output mouths and are movable around an axis of theirs so as to help the cigarettes move downward; furthermore, the hopper is provided with at least an unloading element, which is arranged upstream of the plurality of agitating elements and is shaped so as to relieve the plurality of agitating elements from the weight of the flow of cigarettes.

### DESCRIPTION OF THE INVENTION

The object of the invention is to overcome the aforesaid drawbacks, i.e. to avoid undesired obstructions of one or more ducts of the output mouths.

In order to do so, the invention offers a hopper for smoking articles according to the appended claims.

Advantageously, the hopper according to the invention avoids the blockage of the agitating element and the undesired obstructions of the output mouths, thus ensuring a high productivity.

### BRIEF DESCRIPTION OF THE DRAWINGS

Other advantages will be best understood upon perusal of the following description, with reference to the accompanying drawing, wherein:
- Figure 1 is a schematic view of a hopper for smoking articles according to the invention;
- Figure 2 is an enlarged view of a detail of Figure 1;
- Figure 3 is an enlarged detail of Figure 2.

### PREFERRED EMBODIMENTS OF THE INVENTION

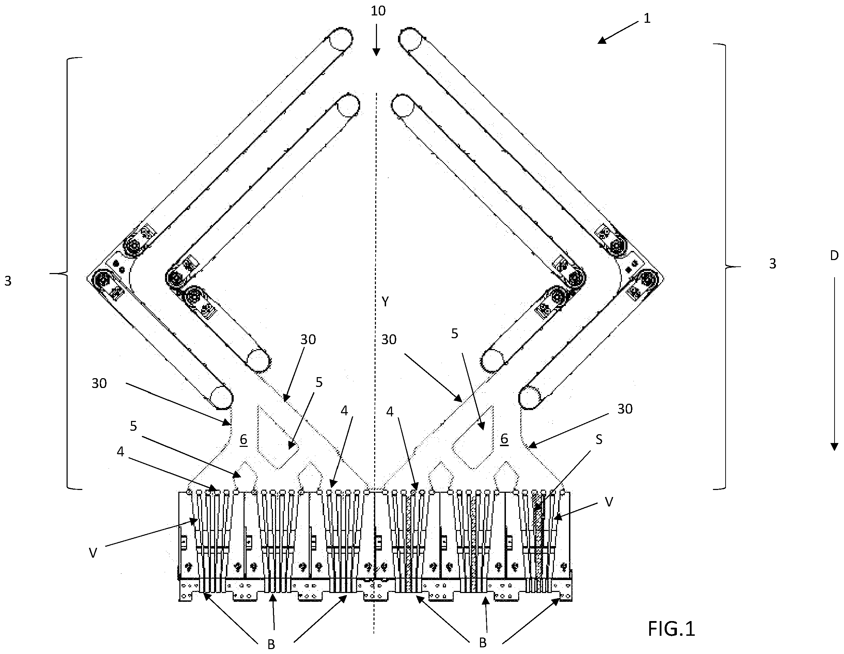

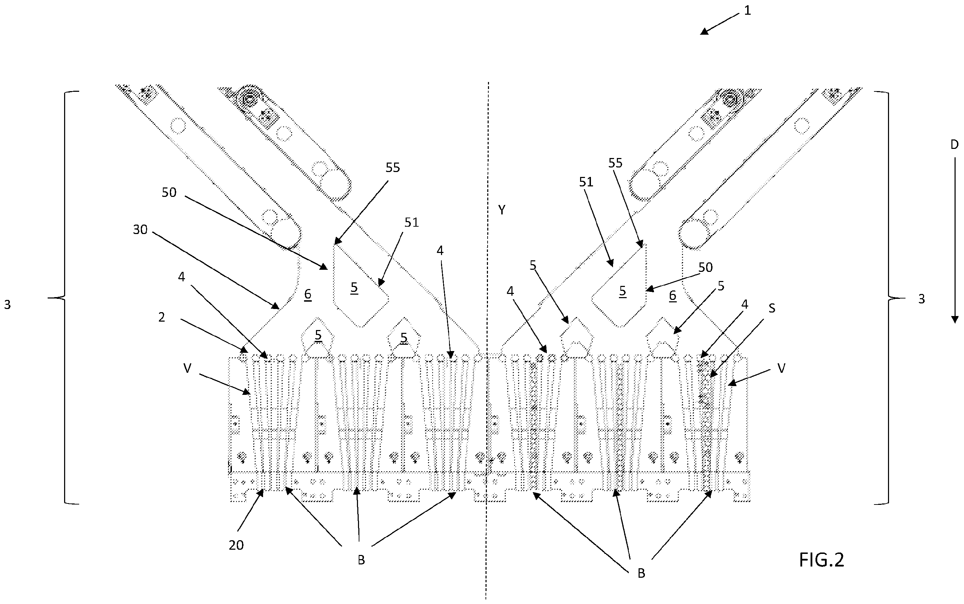

With reference to figures 1 and 2 attached hereto, number 1 indicates a hopper for smoking articles S (which are shown only schematically) according to the invention. With reference to accompanying figures, the hopper 1 has a mainly vertical extension.

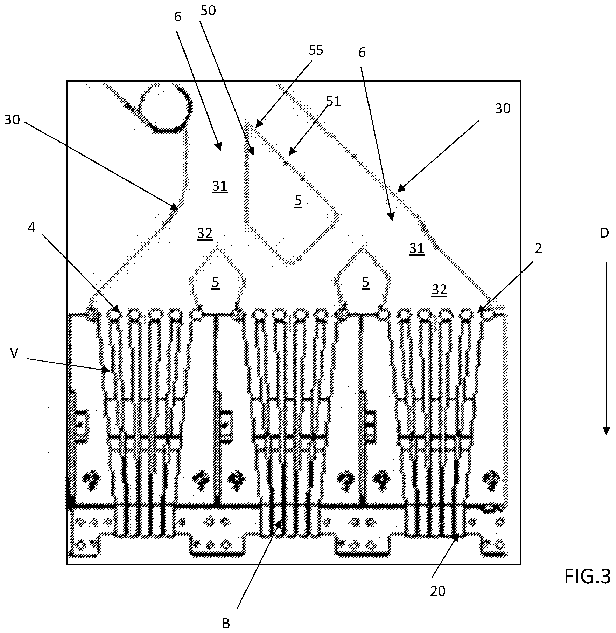

The hopper 1 comprises: an inlet portion 10 for letting smoking articles S into the hopper 1, and at least an output mouth B comprising a plurality of ducts V, each having an inlet 2 and an outlet 20 (indicated in figures 2 and 3) for letting the smoking articles S out of the hopper 1.

The smoking articles are, for example, cigarettes and are visible in figure 2, where they are arranged inside a duct V of the output mouth B.

The hopper 1 further comprises: a connection portion 3, which connects the inlet portion 10 to the ducts V of the output mouth B and comprises at least a pair of lateral walls 30 opposed each other, which come into contact with the smoking articles S and along which the flow of smoking articles S moves downward in an output direction D towards the output mouth B; and a plurality of (schematically shown) agitating elements 4, which are arranged at the inlet of the ducts V of the output mouths B and receive on them, by gravity, the flow of smoking articles S. The agitating elements 4 are movable (for example in oscillation) around an axis of theirs so as to help the smoking articles S move downward from the connection portion 3 towards the outlet of the ducts V (preferably by means of a dedicated motor). For example, the agitating elements 4 rotate or oscillate around an axis of theirs. The agitating elements 4 can have, for example, a cylindrical shape with a circular cross section and be capable of rotating or oscillating around their own longitudinal axis. Alternatively, the agitating elements 4 can have any other shape and/or cross section.

In particular, the hopper 1 comprises at least an unloading element 5, which is arranged in the connection portion 3 between the two lateral walls 30, upstream of the plurality of agitating elements 4 relative to the output direction D, and is shaped so as to receive the flow of smoking articles S during their downward movement in the output direction D and relieve the plurality of agitating elements 4 from the weight of the flow of smoking articles S. The unloading element 5 is fixed relative to the output mouth B (namely, it is not movable relative to the output mouth B). In other words, the unloading element 5 receives on itself, by gravity, the flow of smoking articles S during their downward movement in the output direction D, thus unloading onto itself part of the weight of the smoking articles S, which would otherwise exclusively weigh on the agitating elements 4 (a condition that could determine the blockage, with consequent undesired obstruction of the ducts V of the output mouth B).

With reference to the accompanying figures, there is a plurality of output mouths B and the agitating elements 4 are arranged at the inlet 2 of each duct V of each output mouth B.

With reference to the accompanying figures, the unloading element 5 comprises a sloped portion 50, 51 for receiving and, preferably, dividing the flow of smoking articles S during their downward movement in the output direction D (see, in particular, figures 2 and 3).

With reference to the accompanying figures, again, the unloading element 5 comprises a first wall 50 and a second wall 51, which are contiguous to each other and are inclined so as to define a vertex 55, in order to divide the flow of smoking articles S during their downward movement in the output direction D (see, in particular, figures 2 and 3). Advantageously, this embodiment allows for an optimal unloading of the weight of the smoking articles S during their downward movement towards the output mouth B.

According to an alternative embodiment, which is not shown herein, the sloped portion comprises a curved portion for receiving and, preferably, dividing the flow of smoking articles S during their downward movement in the output direction D. Preferably, according to the accompanying figures, the unloading element 5 has a section (for example a cross section) with the shape of a pentagon.

According to the preferred embodiment of the invention, the connection portion 3 comprises a first part 31 and a second part 32, adjacent to the first part 31 and downstream of the first part 31 relative to the output direction D, with the cross section of the first part 31 being smaller than the cross section of the second part 32, so as to define a channel 6 whose section widens along the output direction D (see, in particular, figure 3).

Advantageously, by so doing, an undesired obstruction of the output mouth B is further avoided. Indeed, the section of the channel 6 of the connection portion 3 becomes wider when moving from the first part 31 to the second part 32. In this way, "funnel" situations are avoided, which would cause undesired blockages of the smoking articles S in the connection portion 3. On the contrary, the channel 6 has the shape of an "upside-down funnel".

The cross section of the aforesaid first part 31 of the connection portion 3 is sized so as to permit the passage of a given number of smoking articles S; in other words, the dimension of the cross section of the first part 31 of the connection portion 3 is equal to a multiple of the size of the cross section of a smoking article S increased by a minimum clearance, namely by a space that is smaller than half the dimension of the cross section of a smoking article S. In this way, advantageously, the presence of the aforesaid clearance facilitates the passage of a given number of smoking articles S, simultaneously preventing a further smoking article S from getting stuck in the first part 31, thus causing an undesired obstruction. According to the preferred embodiment and with specific reference to figure 3, the first part 31 of the connection portion 3 is defined between a lateral wall 30 of the connection portion 3 and the unloading element 5. In other words, a lateral wall 30 of the connection portion 3 and the unloading element 5 (in particular, at least a wall thereof) are shaped in a mutual manner, so as to define said first part 31 and said second part 32. To this aim, for example, the unloading element 5 has a cross section with the shape of a pentagon, as already mentioned above.

Preferably, there is a plurality of unloading elements 5, like in the case shown herein. Figures 1-3 show an unloading element 5 between an output mouth B and the other, besides a further unloading element 5 arranged between two adjacent output mouths B. With particular reference to this last arrangement of the unloading elements 5, the pentagon cross section thereof turns out to be particularly advantageous, as it avoids the formation of "bridges" of smoking articles S between an output mouth B and the other.

With reference, in particular, to figure 3 attached hereto, each unloading element 5 defines, with the relative walls, different first parts 31 and different second parts 32, which are arranged upstream and downstream of each other with reference to the output direction of the smoking articles S.

In other words, each unloading element 5 divides the connection portion 3 into different channels 6, whose section increases along the output direction D.

With reference to the accompanying figures, again, the hopper 1 is symmetrical relative to its own longitudinal vertical axis Y (see, in particular, figures 1 and 2). In other words, all the details described above, in the embodiment shown herein, are repeated on the left and on the right, respectively, of the aforesaid axis Y.

## Claims

1. A hopper (1) for smoking articles (S) comprising:
an inlet portion (10) for the inlet of smoking articles into the hopper (1);
at least an output mouth (B) comprising a plurality of ducts (V), each duct (V) having an inlet (2) and an outlet (20), for allowing the exit of the smoking articles (S) from the hopper (1);
a connection portion (3), connecting the inlet portion (10) with the ducts (V) of the output mouth (B) and comprising two lateral walls (30) opposed each other, against which the smoking articles (S) abut and along which the smoking articles (S) flow falls in an output direction (D) toward the output mouth (B);
a plurality of agitating elements (4), positioned at the inlet (2) of the ducts (V) of the output mouth (B), which receives on them, by gravity, the smoking articles (S) flow; each agitating element (4) being movable with respect to one of its axes for facilitating the smoking articles (S) fall from the connecting portion (3) toward the outlets (20) of the ducts; and
at least an unloading element (5), disposed at the connection portion (3) between the two lateral walls (30), upstream with respect to the agitating elements (4) in the output direction (D); the unloading element (5) being shaped in such a way to receive the smoking articles (S) flow during their fall in the output direction (D), and unloading the plurality of agitating elements (4) from the weight of the smoking articles (S) flow;
wherein the connection portion (3) comprises a first part (31) and a second part (32), adjacent to the first part (31) and downstream with respect to the first part (31) in the output direction (D); and
wherein the cross section of the first part (31) is smaller than the cross section of the second part (32), in such a way to define at least a channel (6) having a cross section widening in the output direction (D);
the hopper (1) is **characterized in that** the dimension of the cross section of the first part (31) of the connection portion (3) is equal to a multiple of the dimension of the cross section of a smoking article (S), increased by a space that is smaller than half the dimension of the cross section of a smoking article (S).

2. The hopper (1) of the preceding claim, in which the unloading element (5) comprises a sloping portion (50, 51) for receiving the smoking article (S) flow in their fall in the output direction (D).

3. The hopper (1) of the preceding claim, in which said sloping portion comprises a first wall (50) and a second wall (51) that are contiguous and tilted between them as to define a vertex (55).

4. The hopper (1) of the preceding claim, in which the unloading element (5) has a section shaped as a pentagon.

5. The hopper (1) of claim 2, in which said sloped portion comprises a curved wall for receiving the smoking article (S) flow in their fall in the output direction (D).

6. The hopper (1) of anyone of the preceding claims, in which the first part (31) is defined between a lateral wall (30) of the connection portion (3) and at least a corresponding wall of the unloading element (5).

7. The hopper (1) of anyone of the preceding claims, comprising a plurality of output mouths (B) and a plurality of unloading elements (5).

## Patentansprüche

1. Beschickungsbehälter (1) für Raucherzeugnisse (S), umfassend:
einen Einlassabschnitt (10) für den Einlass von Raucherzeugnissen in den Beschickungsbehälter (1);
mindestens eine Auslassmündung (B), die mehrere Schächte (V) umfasst, wobei jeder Schacht (V) einen Einlass (2) und einen Auslass (20) zum Ermöglichen des Austritts der Raucherzeugnisse (S) aus dem Beschickungsbehälter (1) aufweist;
einen Verbindungsabschnitt (3), der den Einlassabschnitt (10) mit den Schächten (V) der Auslassmündung (B) verbindet und zwei Seitenwände (30) umfasst, die einander gegenüberliegen, an denen die Raucherzeugnisse (S) anliegen und entlang welcher der Strom der Raucherzeugnisse (S) in einer Auslassrichtung (D) zur Auslassmündung (B) hin fällt;
mehrere Bewegungselemente (4), die am Einlass (2) der Schächte (V) der Auslassmündung (B) angeordnet sind, die den Strom der Raucherzeugnisse (S) durch Schwerkraft aufnehmen; wobei jedes Bewegungselement (4) in Bezug auf eine seiner Achsen beweglich ist, um zu ermöglichen, dass die Raucherzeugnisse (S) aus dem Verbindungsabschnitt (3) in Richtung der Auslässe (20) der Schächte fallen; und
mindestens ein Entlastungselement (5), das am Verbindungsabschnitt (3) zwischen den zwei Seitenwänden (30) in Bezug auf die Bewegungselemente (4) in der Auslassrichtung (D) stromaufwärts angeordnet ist; wobei das Entlastungselement (5) auf eine derartige Weise geformt ist, um den Strom der Raucherzeugnisse (S) während deren Fallens in der Auslassrichtung (D) aufzunehmen, und die mehreren Bewegungselemente (4) von dem Gewicht des Stroms der Raucherzeugnisse (S) entlastet;
wobei der Verbindungsabschnitt (3) eine erste Komponente (31) und eine zweite Komponente (32), die zur ersten Komponente (31) benachbart ist und in Bezug auf die erste Komponente (31) in der Auslassrichtung (D) stromabwärts liegt, umfasst; und
wobei der Querschnitt der ersten Komponente (31) kleiner als der Querschnitt der zweiten Komponente (32) ist, in einer Weise, um mindestens ein Kanal (6) mit einem Querschnitt, der sich in der Auslassrichtung (D) verbreitert, zu definieren;
wobei der Beschickungsbehälter (1) **dadurch gekennzeichnet ist, dass** die Abmessung des Querschnitts der ersten Komponente (31) des Verbindungsabschnitts (3) gleich einem Vielfachen der Abmessung des Querschnitts eines Raucherzeugnisses (S) ist, vergrößert um einen Raum, der kleiner als die Hälfte der Abmessung des Querschnitts eines Raucherzeugnisses (S) ist.

2. Beschickungsbehälter (1) nach dem vorhergehenden Anspruch, wobei das Entlastungselement (5) einen geneigten Abschnitt (50, 51) zum Aufnehmen des Stroms der Raucherzeugnisse (S) bei deren Fallen in der Auslassrichtung (D) umfasst.

3. Beschickungsbehälter (1) nach dem vorhergehenden Anspruch, wobei der geneigte Abschnitt eine erste Wand (50) und eine zweite Wand (51) umfasst, die zusammenhängend und dazwischen geneigt sind, derart, um einen Scheitel (55) zu definieren.

4. Beschickungsbehälter (1) nach dem vorhergehenden Anspruch, wobei das Entlastungselement (5) einen Abschnitt aufweist, der als ein Fünfeck geformt ist.

5. Beschickungsbehälter (1) nach Anspruch 2, wobei der geneigte Abschnitt eine gekrümmte Wand zum Aufnehmen des Stroms der Raucherzeugnisse (S) bei deren Fallen in der Auslassrichtung (D) umfasst.

6. Beschickungsbehälter (1) nach einem der vorhergehenden Ansprüche, wobei die erste Komponente (31) zwischen einer Seitenwand (30) des Verbindungsabschnitts (3) und mindestens einer entsprechenden Wand des Entlastungselements (5) definiert ist.

7. Beschickungsbehälter (1) nach einem der vorhergehenden Ansprüche, umfassend mehrere Auslassmündungen (B) und mehrere Entlastungselemente (5).

## Revendications

1. Trémie (1) pour articles à fumer (S) comprenant :
une portion d'admission (10) pour l'admission d'articles à fumer dans la trémie (1) ;
au moins une embouchure de fourniture en sortie (B) comprenant une pluralité de conduits (V), chaque conduit (V) ayant une admission (2) et une évacuation (20), pour permettre la sortie des articles à fumer (S) de la trémie (1) ;
une portion de raccordement (3), raccordant la portion d'admission (10) aux conduits (V) de l'embouchure de fourniture en sortie (B) et comprenant deux parois latérales (30) opposées l'une à l'autre, contre lesquelles butent les articles à fumer (S) et le long desquelles le flux d'articles à fumer (S) tombe dans une direction de fourniture en sortie (D) vers l'embouchure de fourniture en sortie (B) ;
une pluralité d'éléments d'agitation (4), positionnés au niveau de l'admission (2) des conduits (V) de l'embouchure de fourniture en sortie (B), qui reçoivent sur eux, par gravité, le flux d'articles à fumer (S) ; chaque élément d'agitation (4) étant mobile vis-à-vis de l'un de ses axes pour faciliter la chute des articles à fumer (S) depuis la portion de raccordement (3) vers les évacuations (20) des conduits ; et
au moins un élément de déchargement (5), disposé au niveau de la portion de raccordement (3) entre les deux parois latérales (30), en amont vis-à-vis des éléments d'agitation (4) dans la direction de fourniture en sortie (D) ; l'élément de déchargement (5) étant mis en forme de sorte à recevoir le flux d'articles à fumer (S) pendant leur chute dans la direction de fourniture en sortie (D), et déchargeant la pluralité d'éléments d'agitation (4) de leur poids du flux d'articles à fumer (S) ;
dans laquelle la portion de raccordement (3) comprend une première partie (31) et une deuxième partie (32), adjacente à la première partie (31) et en aval vis-à-vis de la première partie (31) dans la direction de fourniture en sortie (D) ; et
dans laquelle la section transversale de la première partie (31) est plus petite que la section transversale de la deuxième partie (32), de sorte à définir au moins un canal (6) ayant une section transversale s'élargissant dans la direction de fourniture en sortie (D) ;
la trémie (1) est **caractérisée en ce que** la dimension de la section transversale de la première partie (31) de la portion de raccordement (3) est égale à un multiple de la dimension de la section transversale d'un article à fumer (S), augmentée d'un espace qui est plus petit que la moitié de la dimension de la section transversale d'un article à fumer (S).

2. Trémie (1) selon la revendication précédente, dans laquelle l'élément de déchargement (5) comprend une portion en pente (50, 51) pour recevoir le flux d'articles à fumer (S) dans leur chute dans la direction de fourniture en sortie (D).

3. Trémie (1) selon la revendication précédente, dans laquelle ladite portion en pente comprend une première paroi (50) et une deuxième paroi (51) qui sont contiguës et inclinées entre elles de façon à définir un sommet (55).

4. Trémie (1) selon la revendication précédente, dans laquelle l'élément de déchargement (5) a une section en forme en pentagone.

5. Trémie (1) selon la revendication 2, dans laquelle ladite portion en pente comprend une paroi courbée pour recevoir le flux d'articles à fumer (S) dans leur chute dans la direction de fourniture en sortie (D).

6. Trémie (1) selon l'une quelconque des revendications précédentes, dans laquelle la première partie (31) est définie entre une paroi latérale (30) de la portion de raccordement (3) et au moins une paroi correspondante de l'élément de déchargement (5).

7. Trémie (1) selon l'une quelconque des revendications précédentes, comprenant une pluralité d'embouchures de fourniture en sortie (B) et une pluralité d'éléments de déchargement (5).
